# EUROPÄISCHE PATENTANMELDUNG

(11) **EP 4 527 483 A1**
(43) Veröffentlichungstag der Anmeldung: **26.03.2025**
(21) Anmeldenummer: 24195458.5
(22) Anmeldetag: 20.08.2024
(51) Int. Cl.: B01D 53/04, B01D 46/00, F24F 11/36

(54) **MODULARER AKTIVKOHLEBEHÄLTER FÜR EIN KÄLTEMITTEL**

(30) Priorität: 22.08.2023 DE 102023122396
(71) Anmelder: Vaillant GmbH, 42859 Remscheid NRW (DE)
(72) Erfinder: Schaps, Rene, 44267 Dortmund (DE); Muessener, Matthias, 42499 Hückeswagen (DE); Riecke, Harald, 42853 Remscheid (DE)
(74) Vertreter: Popp, Carsten

(57) **Zusammenfassung**

Modularer Aktivkohlebehälter (1), aufweisend mindestens zwei Einsätze (2) für Aktivkohle, wobei jeder der Einsätze (2) ausgestattet ist mit bodenseitigen Öffnungen und einem Gitter (3), welches die gesamte Bodenfläche der Einsätze (2) überdeckt, wobei das Gitter (3) luftdurchlässig und geeignet ist, Aktivkohle zurückzuhalten, jeder der Einsätze (2) mit einer umlaufenden Seitenwand versehen ist, an jeder der umlaufenden Seitenwände im oberen Bereich Dichtungen (7) vorgesehen sind, auf diesen Dichtungen (7) für jeden der Einsätze ein Deckel (4) befestigt ist, die Befestigung der Deckel (4) auf den Einsätzen (2) mittels einer Vielzahl von als Schnapphaken (5) ausgeführten Hinterschneidungen an den Rändern der Deckel (4) erfolgen, die in außen auf die umlaufenden Seitenwänden eingelassenen Aussparungen (6) der Seitenwände der Einsätze (2) eingreifen, wobei die umlaufenden Dichtungen (7) dichtend gespannt werden, jeder der Deckel (4) eine verschließbare Einfüllöffnung (8) für Aktivkohle aufweist, alle Einsätze (2) dieselben Querschnitte aufweisen und übereinander angeordnet und miteinander dichtend verbunden werden, wobei sie einen Aktivkohlebehälter (1) bilden.

## Beschreibung

Die Erfindung betrifft eine Adsorptionsvorrichtung, die als Sicherheitsvorrichtung in Form eines Aktivkohlefilters für den Einsatz des Kältemittels R290 sowie anderer Kältemittel in Kältekreisen von Wärmepumpensystemen für den Fall vorgesehen wird, dass irreguläre Zustände in Kältekreisen auftreten, in denen ein als Kältemittel wirkendes Arbeitsfluid in einem thermodynamischen Kreisprozess, wie zum Beispiel dem Clausius-Rankine-Kreisprozess, geführt wird. Sie ermöglicht eine stufenweise Erweiterung der Aktivkohlemodule für den Einsatz größerer Mengen Kältemittel im Kältekreis, falls bestehende Anlagen erweitert oder nachgerüstet werden sollen. Vorwiegend sind dies Wärmepumpensysteme, Klimaanlagen und Kühlgeräte, wie sie in Wohngebäuden gebräuchlich sind.

Der Einsatz von Aktivkohlefiltern als Sicherheitsvorrichtung für R290 und anderer Kohlenwasserstoffe als Kältemittel wie beispielsweise R600a und R1270 ist im Stand der Technik gut bekannt. Diese haben den Vorteil besonders hoher erreichbarer Wirkungsgrade, es müssen aber wegen der Brennbarkeit Vorkehrungen hinsichtlich der Sicherheit gegenüber Notfällen getroffen werden. Dies betrifft vor allem Leckagen nach Betriebsstörungen.

Die auftretenden Probleme bei der Sicherheitsauslegung solcher Anlagen werden in der EP 4 008 979 A1 anschaulich und ausführlich beschrieben. In vielen Fällen kommen daher Adsorber mit Aktivkohle oder anderen geeigneten Adsorbenzien zum Einsatz. Beispielhaft sei hier auch die DE 10 2011 116 863 A1 genannt.

Die EP 3 106 780 A1 beschreibt eine Wärmepumpenanlage, die in einem mit einem Bindemittel ausgekleideten, luftdichten Gehäuse untergebracht ist. Innerhalb dieses Gehäuses kann eine Adsorptionseinheit mit einer Zwangslüftung angeordnet sein, die im Umluftbetrieb die Luft im Gehäuse reinigt. Dieser Umluftbetrieb kann kontinuierlich oder nur im Störfall oder in regelmäßigen Intervallen erfolgen.

R290 ist ein leicht entflammbares Gas, welches im Fall einer Leckage aus dem Kältekreis entweichen kann. Gemäß Stand der Technik ist Aktivkohle in der Lage, das besagte Gas zu adsorbieren. Die eingesetzte Menge von Kältemittel und Aktivkohle muss gut abgestimmt sein, um eine vollständige Adsorption gewährleisten zu können, außerdem ist sicherzustellen, dass bei jeder Art von Leckage das mit Kältemittel beladene Luftgemisch auch vollständig zur Aktivkohle gelangt. Mögliche Leckagestellen sind alle Einrichtungen des Kältekreises und die installierten Wärmeübertrager. Wenn diese Wärmeübertrager mit Wärmeträgerflüssigkeiten wie Heizungswasser oder Sole verbunden sind, könnten bei Leckagen auch diese Flüssigkeiten mit Kältemittel verunreinigt werden und unter Druck gesetzt werden. Abhilfe wird durch druckdichte Kapselung aller Kältemittel führenden Teile bewirkt.

Für die Adsorption von beispielsweise R290 ist die Aktivkohle 207C, Rx1,5 geeignet. Anstelle von oder zusätzlich zu Schüttungen mit Formkörpern können auch offenporige Fliese oder Schaustoffe benutzt werden, welche mit Adsorptionsmitteln belegt sind. Solche Flächenelemente sind im Handel gut erhältlich, beispielsweise mit 21 Millimeter Dicke, einem Flächengewicht von 1,3 kg/m³ bei einer Aktivkohleauflage von 0,55 kg/m³. Sie können aber auch als Formteile passend für den Adsorber hergestellt werden. Als Adsorptionsmaterialien sowohl für Schüttungen als auch für belegte Fliese und Schaumstoffe eignen sich Aktivkohle und auf Vinylidenchloridpolymer basierende Kohlenstoffmolekularsieb-Adsorber-Zusammensetzungen, wie sie beispielsweise in der EP 3 160 639 B1 beschrieben sind.

Für den Einsatz der Aktivkohle im Sicherheitssystem muss die Aktivkohle in einem Behälter mit definierten Abmaßen innerhalb des Wärmepumpen- oder Klimatisierungs- oder Kühlsystems oder innerhalb eines derartigen kombinierten Systems in einem Kapselgehäuse gelagert werden, wobei Wärmepumpengehäuse, Klimaanlagengehäuse, Kühlgehäuse und Kapselgehäuse in Sonderfällen auch zusammenfallen können und die Kapsel des Akivkohlebehälters bei entsprechender Festigkeitsauslegung der Seitenwände Teil der Kapselung sein kann.

Auch solche Technologien sind im Grundsatz bekannt. So beschreibt die CN 106 902 615 A eine modular aufgebaute Aktivkohle-Adsorptionsvorrichtung. Sie umfasst eine obere Dichtplatte, Randverbindungsplatten, seitliche Dichtplatten und eine Bodenplatte. Die obere Dichtplatte, die seitlichen Dichtplatten und die Bodenplatte sind durch die Randverbindungsplatten verbunden, sodass ein abgedichteter Hohlraum entsteht, in welchem Maschenplatten angeordnet sind. Die vier Kanten jeder Maschenplatte sind fest mit inneren Verbindungsplatten, über die inneren Verbindungsplatten fest mit der oberen Dichtplatte, der Bodenplatte und zweiten inneren Dichtplatten verbunden. Die Seitenfläche eines Endes der äußeren Maschenplatte in jeder Gruppe ist mit einer ersten inneren Dichtplatte verbunden, und die Seitenfläche des anderen Endes der inneren Maschenplatte in jeder Gruppe ist mit einer dritten inneren Dichtplatte verbunden. Der Vorteil ist dabei, dass die Montage entweder bei einem Fertiger oder am Aufstellungsort erfolgen kann, je nach Größe und Zugänglichkeit.

Die JP 513 772 682 B beschreibt eine Klimaanlage, die umgerüstet werden soll von einem Kältemittel mit Chlorverbindungen zu einem neuen Kältemittel, wobei aber Rückstände von Eisenchlorid abzuscheiden sind. Dies geschieht mittels einer Aktivkohlebox mit Netzplatten, zwischen denen unterschiedliche Aktivkohlen platziert werden. Diese können dann sukzessive Verbindungen abscheiden, deren Molekulargewicht bis über 300 betragen kann. Zu bemerken ist dabei, dass die Abscheidung im Kältekreis erfolgt, eine Abscheidung von leckagebedingt ausgetretenem Kältemittel aus Luft oder Gas ist nicht vorgesehen.

Zur Adsorption von Kältemittel ist eine Eintritts- sowie eine Austrittsöffnung erforderlich. Mit Ausnahme der Eintritts- und Austrittsöffnung darf kein Kältemittel durch die Seitenwände des Aktivkohlebehälters austreten. Aufgrund des Einsatzes verschiedener Kältekreisgrößen ist es erforderlich, die Aktivkohlemenge anhand des eingesetzten Kältemittelvolumens anzupassen.

Die Aufgabe der Erfindung ist daher, eine modulare, sichere und wirtschaftliche Vorrichtung bereitzustellen, bei der die Menge an Adsorptionsmittel in skalierbarer Weise dem Bedarf von Kältekreisen, die mit brennbaren Kältemitteln betrieben werden, angepasst werden kann.

Die Erfindung löst die Aufgabe durch einen modularen Aktivkohlebehälter, aufweisend
- mindestens zwei Einsätze für Aktivkohle,
- jeder der Einsätze ausgestattet mit bodenseitigen Öffnungen und einem Gitter, welches die gesamte Bodenfläche überdeckt,
- wobei das Gitter luftdurchlässig und geeignet ist, Aktivkohle zurückzuhalten,
- jeder der Einsätze mit einer umlaufenden Seitenwand versehen ist,
- an jeder der umlaufenden Seitenwände im oberen Bereich Dichtungen vorgesehen sind,
- auf diesen Dichtungen für jeden der Einsätze ein Deckel befestigt ist,
- die Befestigung der Deckel auf den Einsätzen mittels einer Vielzahl von als Schnapphaken ausgeführten Hinterschneidungen an den Rändern der Deckel erfolgen, die außen auf die in umlaufenden Seitenwänden eingelassenen Aussparungen der Seitenwände der Einsätze eingreifen, wobei die umlaufenden Dichtungen dichtend gespannt werden,
- jeder der Deckel eine verschließbare Einfüllöffnung für Aktivkohle aufweist,
- alle Einsätze dieselben Querschnitte aufweisen und übereinander angeordnet und miteinander dichtend verbunden werden, wobei sie einen Aktivkohlebehälter bilden.

Ausgestaltungen betreffen die Querschnitte der Einsätze und deren Deckel. Hierbei ist vorgesehen, dass die Querschnitte aus abgerundeten Rechtecken gebildet sind. Die abgerundeten Rechtecke können dabei auch abgerundete Quadrate sein.

In weiteren Ausgestaltungen ist vorgesehen, dass die Deckel der Einsätze teilweise durch Gitter luftdurchlässig und teilweise von Abprallflächen luftundurchlässig gestaltet sind. In weiteren Ausgestaltungen ist vorgesehen, dass die Abprallflächen verschiedener Einsätze als Umlenkflächen gestaltet sind. In einer weiteren Ausgestaltung ist vorgesehen, dass die Abprallfläche des obersten Deckels mindestens vier Fünftel der Querschnittfläche, vorzugsweise fünf Sechstel der Querschnittsfläche ausmacht.

Weitere Ausgestaltungen betreffen die verwendeten Aktivkohlen. Hierbei können Partikel aus Aktivkohle 207C, Rx1,5 und auf Vinylidenchloridpolymer basierende Kohlenstoffmolekularsieb-Adsorber-Zusammensetzungen verwendet werden.

Weitere Ausgestaltungen betreffen die Schnapphaken und Aussparungen. Hierbei ist vorgesehen, dass an den Deckeln 8 Schnapphaken in Form von Hinterschneidungen vorgesehen werden, und zwar je 4 in den Mitten der Seitenwände und 4 an den abgerundeten Ecken. Die Aussparungen in den Seitenwänden sind dabei nicht durchgehend. Ihre Form entspricht der Form der Schnapphaken.

Die Erfindung betrifft auch Verwendungen. Hierbei ist vorgesehen, dass die Aktivkohlebehälter als ganzes auf einem Kapselgehäuse fixiert werden und damit eine dichte Verbindung bilden und so als Sicherheitseinrichtung für den Fall einer Kältemittelleckage in einem der Kältemittel führenden Kältekreis dienen, wobei das Kapselgehäuse zum untersten Einsatz des Aktivkohlebehälters hin offen ist.

Die Erfindung wird nachfolgend anhand der Figuren Fig. 1 bis Fig. 4 näher erläutert.
- Fig. 1 zeigt einen Aktivkohlebehälter mit mehreren Aktivkohleeinsätzen.
- Fig. 2 zeigt eine erste Variante eines Deckels für einen Aktivkohleeinsatz.
- Fig. 3 zeigt eine zweite Variante eines Deckels für einen Aktivkohleeinsatz.
- Fig. 4 zeigt eine dritte Variante eines Deckels für einen Aktivkohleeinsatz,
- Fig. 5 zeigt eine dichte Schnappverbindung,
- Fig. 6 zeigt einen Dichtungswulst,
- Fig. 7 zeigt einen Aktivkohlebehälter auf einem Kapselgehäuse,
- Fig. 8 zeigt die Lage von Aktivkohlebehälter und Kapselgehäuse in einem Wärmepumpengehäuse.

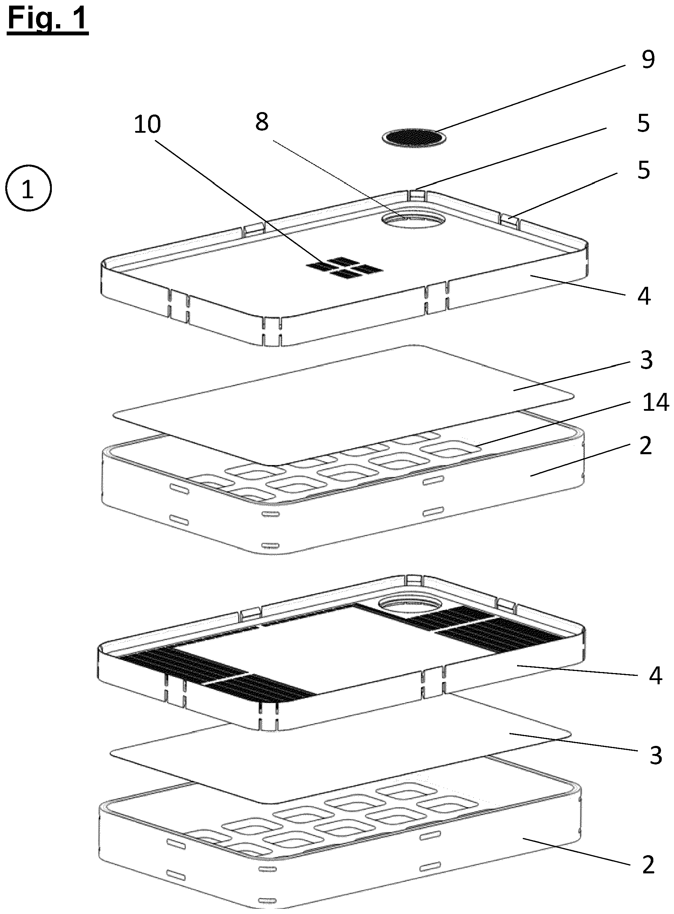

Fig. 1 zeigt einen Aktivkohlebehälter 1 mit mehreren Aktivkohleeinsätzen 2, wobei die Aktivkohleeinsätze 2 zusammen den Aktivkohlebehälter 1 bilden. Jeder Aktivkohleeinsatz 2 dient zur Aufnahme der Aktivkohle, besteht aus dem Material EPP, welches in einer vorgegebenen Dichtekonfiguration hergestellt werden muss, so dass kein R290 durch die Materialwände entweichen kann. Um ein Herausfallen der Aktivkohle durch die 24 Öffnungen 14 der Aktivkohleeinsätze 2 zu verhindern, wird ein feinmaschiges Gitter 3 unten auf die Innenseite des Aktivkohleeinsatzes 2 geklebt.

Jeder Aktivkohleeinsatz 2 wird mit einem Deckel 4 aus 2K Spritzgussverfahren verschlossen. Die formschlüssige Verbindung erfolgt über die Schnapphaken 5, welche umlaufend am Deckel angebracht sind und in den Hinterschneidungen 6 des Aktivkohleeinsatzes 2 einrasten. Jeder Deckel 5 besitzt eine beidseitig umlaufende Dichtungswulst 7 aus einem weichelastischen Material, welches die Abdichtung zwischen dem Deckel 4 und dem darauf und darunter liegenden Aktivkohleeinsatz gewährleistet. Die Einfüllöffnung 8 zum Befüllen der Module wird mit einem Runddeckel 9 über eine Schnappverbindung verschlossen.

Um die Adsorption beim Durchströmen im vollen Umfang zu gewährleisten, darf die Austrittsöffnung 10 jedes Aktivkohleeinsatzes 2 höchstens ein Fünftel, vorzugsweise ein Sechstel der Eintrittsöffnung 11 betragen. Durch Werkzeugeinsätze kann diese definierte Öffnung mittels Umspritzen der Öffnungen in jedem Deckel 4 mittels weichelastischen Materials erzielt werden.

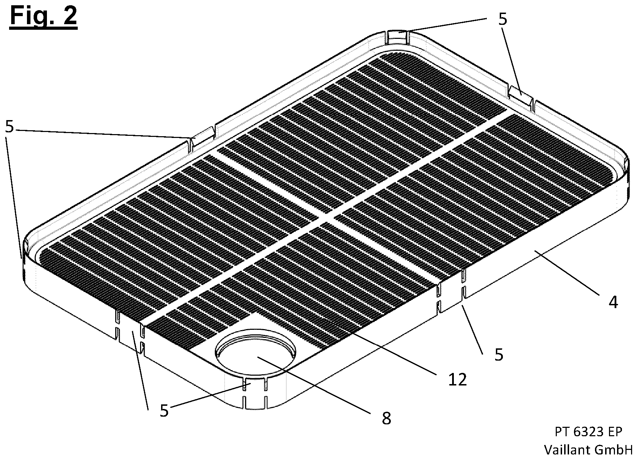

Die Fig. 2 bis 4 zeigen drei Varianten des Deckels 4 auf einem Aktivkohleeinsatz 2 aus der Perspektive von unten. Diese können alle mit nur einem 2K-Spritzgusswerkzeug hergestellt werden, selbstverständlich können auch weitere Varianten so erzeugt werden.

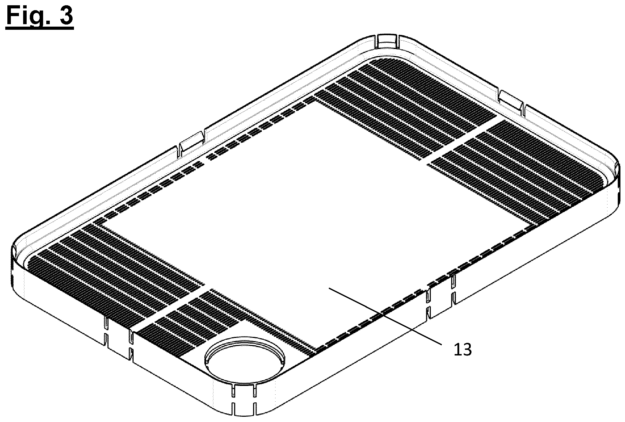

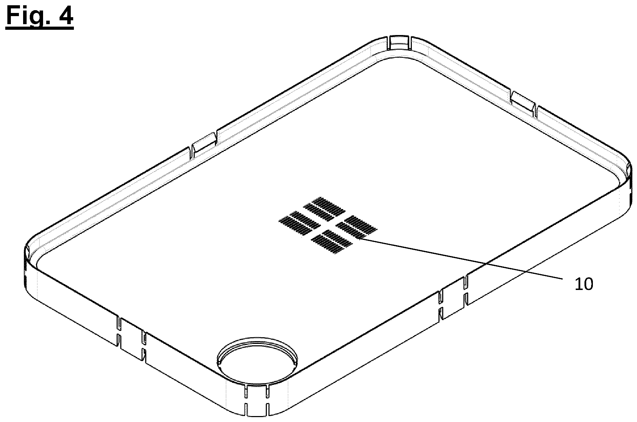

Fig. 2 zeigt dabei eine Variante mit einem offenen Gitter 12, die in Fig. 1 dem untersten Deckel 4 entspricht, Fig. 3 eine Variante mit einer Abprallfläche 13 für den mittleren Deckel in Fig. 1 und Fig. 4 eine Variante mit einer definierten Austrittsöffnung 10 für den obersten Deckel 4 in Fig. 1. Aufgrund der modularen Bauweise und Montagetechnologie können verschiedene Kältekreisgrößen ohne den Einsatz neuer Werkzeuge durch Stapeln der Module bedient werden.

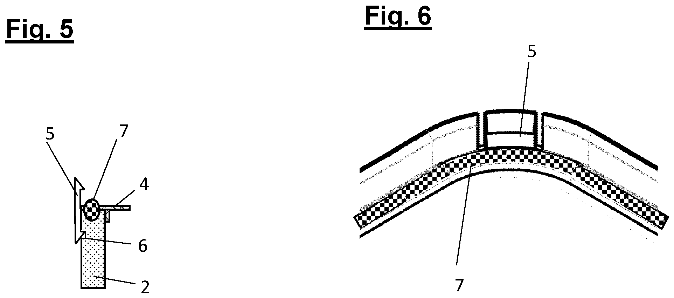

Fig. 5 zeigt das System der Schnapphaken 5 und der Aussparung 6. Die Verbindung muss dicht ausgeführt werden, beim Einrasten der Schnapphaken 5 wird gleichzeitig eine Dichtung angedrückt, die als Dichtungswulst 7 gezeigt ist.

Fig. 6 zeigt einen Ausschnitt des umlaufenden Dichtungswulstes 7, der für die Dichtung von Einsätzen 2 und Deckeln 4 sorgt.

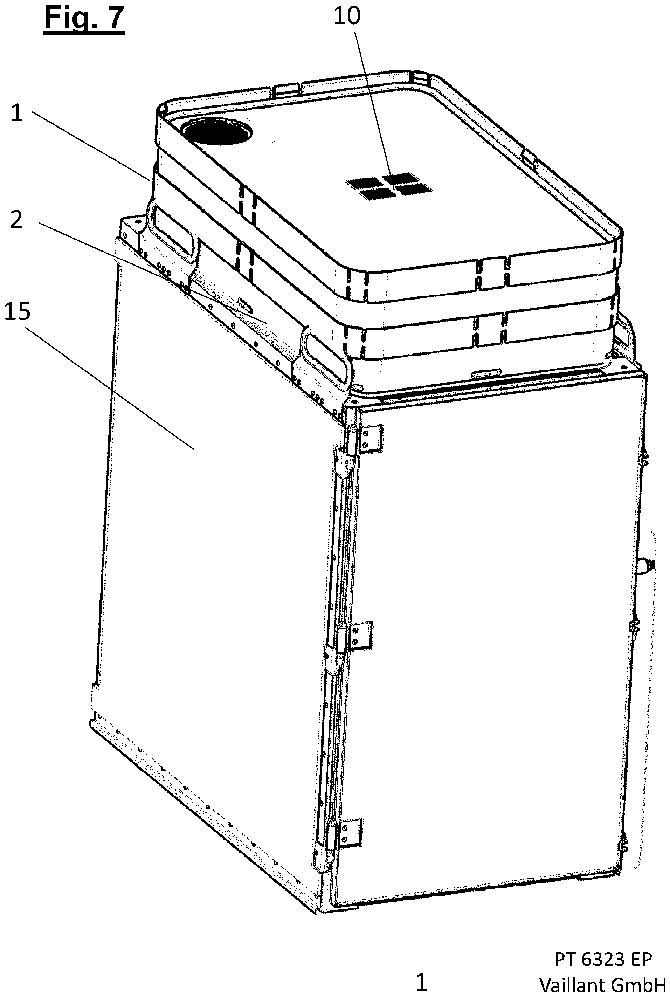

Fig. 7 skizziert den Strömungsverlauf von kältemittelbeladener Luft durch den Aktivkohlebehälter 1, der sich in einem Wärmepumpengehäuse 16 genau über einem Kapselgehäuse 15 mit einem Kältekreis befindet und mit diesem hydraulisch verbunden ist. Das Luft-Kältemittelgemisch tritt dabei von unten in den unteren Einsatz 2 ein und verlässt ihn als gefilterte, kältemittelfreie Luft nach oben. Die Verbindung mit dem Kapselgehäuse 15 erfolgt dabei ebenfalls über Schnapphaken, der unterste Deckel 2 wird direkt mit dem Kapselgehäuse 15 verbunden und schließt dieses nach oben ab.

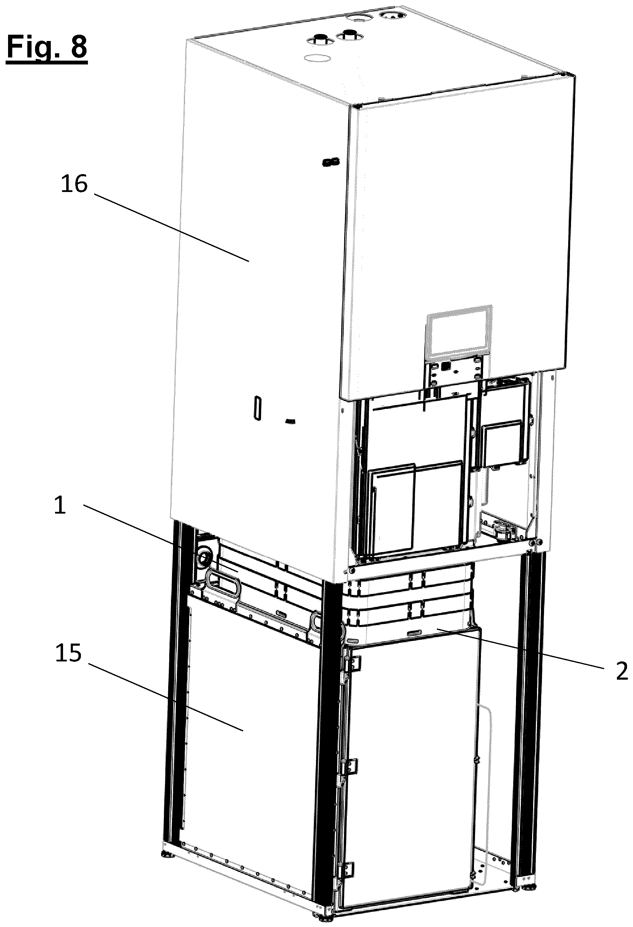

Fig. 8 zeigt eine beispielhafte Einbaulage des Aktivkohlebehälters 1 mit dem Kapselgehäuse 15 darunter, in einer Wärmepumpe innerhalb eines Wärmepumpengehäuses 16.

### Bezugszeichen

- 1: Aktivkohlebehälter
- 2: Einsatz
- 3: Gitter
- 4: Deckel
- 5: Schnapphaken / Hinterschneidung
- 6: Aussparung / Kavität
- 7: Dichtungswulst
- 8: Einfüllöffnung
- 9: Runddeckel
- 10: Austrittsöffnung
- 11: Eintrittsöffnung
- 12: offenes Gitter
- 13: Abprallfläche
- 14: Öffnungen
- 15: Kapselgehäuse
- 16: Wärmepumpengehäuse

## Patentansprüche

1. Modularer Aktivkohlebehälter (1), aufweisend mindestens zwei Einsätze (2) für Aktivkohle,
**dadurch gekennzeichnet, dass**
- jeder der Einsätze (2) ausgestattet ist mit bodenseitigen Öffnungen und einem Gitter (3), welches die gesamte Bodenfläche der Einsätze (2) überdeckt,
- wobei das Gitter (3) luftdurchlässig und geeignet ist, Aktivkohle zurückzuhalten,
- jeder der Einsätze (2) mit einer umlaufenden Seitenwand versehen ist,
- an jeder der umlaufenden Seitenwände im oberen Bereich Dichtungen (7) vorgesehen sind,
- auf diesen Dichtungen (7) für jeden der Einsätze ein Deckel (4) befestigt ist,
- die Befestigung der Deckel (4) auf den Einsätzen (2) mittels einer Vielzahl von als Schnapphaken (5) ausgeführten Hinterschneidungen an den Rändern der Deckel (4) erfolgen, die außen auf die in umlaufenden Seitenwänden eingelassenen Aussparungen (6) der Seitenwände der Einsätze (2) eingreifen, wobei die umlaufenden Dichtungen (7) dichtend gespannt werden,
- jeder der Deckel (4) eine verschließbare Einfüllöffnung (8) für Aktivkohle aufweist,
- alle Einsätze (2) dieselben Querschnitte aufweisen und übereinander angeordnet und miteinander dichtend verbunden werden, wobei sie einen Aktivkohlebehälter (1) bilden.

2. Modularer Aktivkohlebehälter nach Anspruch 1, **dadurch gekennzeichnet, dass** die Querschnitte der Einsätze (2) und deren Deckel (4) aus abgerundeten Rechtecken gebildet sind.

3. Modularer Aktivkohlebehälter nach Anspruch 2, **dadurch gekennzeichnet, dass** die Querschnitte der Einsätze (2) und deren Deckel (4) aus abgerundeten Quadraten gebildet sind.

4. Modularer Aktivkohlebehälter nach einem der Ansprüche 1 bis 3, **dadurch gekennzeichnet, dass** die die Deckel (4) der Einsätze teilweise durch Gitter (3) luftdurchlässig und teilweise von Abprallflächen (13) luftundurchlässig gestaltet sind.

5. Modularer Aktivkohlebehälter nach Anspruch 4, **dadurch gekennzeichnet, dass** die Abprallflächen (13) verschiedener Einsätze (2) als Umlenkflächen gestaltet sind.

6. Modularer Aktivkohlebehälter nach einem der Ansprüche 4 oder 5, **dadurch gekennzeichnet, dass** die Abprallfläche (13) des obersten Deckels (4) mindestens vier Fünftel der Querschnittfläche, vorzugsweise fünf Sechstel der Querschnittsfläche ausmacht.

7. Modularer Aktivkohlebehälter nach einem der Ansprüche 1 bis 6, **dadurch gekennzeichnet, dass** die Einsätze (2) mit Aktivkohlepartikeln aus Aktivkohle 207C, Rx1,5 oder auf Vinylidenchloridpolymer basierenden Kohlenstoffmolekularsieb-Adsorber-Zusammensetzungen gefüllt sind.

8. Modularer Aktivkohlebehälter nach einem der Ansprüche 1 bis 7, **dadurch gekennzeichnet, dass** an den Seitenwänden der Einsätze (2) und Deckeln (4) je 8 Schnapphaken vorgesehen werden, und zwar je 4 oben in den Mitten der Seitenwände und 4 oben an den abgerundeten Ecken der Seitenwände.

9. Verwendung eines modularen Aktivkohlebehälters (1) entsprechend einem der Ansprüche 1 bis 8 als Sicherheitseinrichtung für den Fall einer Kältemittelleckage in einem Kältemittel führenden Kältekreis.
